# EUROPÄISCHE PATENTSCHRIFT

(11) **EP 0 512 132 B1**
(45) Veröffentlichungstag und Bekanntmachung des Hinweises auf die Patenterteilung: **10.08.1994**
(21) Anmeldenummer: 91107236.1
(22) Anmeldetag: 03.05.1991
(51) Int. Cl.: G21C 19/307, G21C 3/32

(54) **Druckwasserreaktorbrennelement mit in das Fussteil integriertem Trümmerfänger**
Nuclear pressure water fuel assembly comprising a bottom nozzle with integrated debris catcher
Assemblage de combustible à eau pressurisée comprenant un emboul inférieur avec dispositif de retenue de debris

(43) Veröffentlichungstag der Anmeldung: 11.11.1992
(73) Patentinhaber: SIEMENS AKTIENGESELLSCHAFT, 80333 München (DE)
(72) Erfinder: Steinke, Alexander, W-8553 Ebermannstadt (DE)

(56) Entgegenhaltungen:
- EP-A- 0 401 082
- FR-A- 2 070 194
- FR-A- 2 574 579
- US-A- 4 684 495

## Beschreibung

Die Erfindung geht aus von einem Brennelement für einen Druckwasser-Kernreaktor mit einer polygonalen Bodenplatte mit Eintrittsöffnungen für ein Arbeitsmedium in einem Zentrierbohrungen aufweisenden Fußteil am unteren Ende und mit einem Kopfteil mit Austrittsöffnungen für das Arbeitsmedium am oberen Ende. Dazwischen erstrecken sich in Längsrichtung Führungsrohre, die an ihrem oberen Ende im Kopfteil gehalten und an ihrem unteren Ende mit der Bodenplatte lösbar befestigt sind, wobei die Dicke der Bodenplatte zur Aufnahme der bei der Montage und im Betrieb auftretenden Druck- und Zugkräfte bemessen ist. Parallel zu den Führungsrohren sind Brennstäbe angeordnet, die durch Abstandshaltemittel zwischen dem Fußteil und dem Kopfteil gehalten und in ihrem seitlichen Abstand von den Führungsrohren fixiert sind. Im Fußteil ist unten ein Rohrstück angeordnet, ferner ist im Strömungsweg des Arbeitsmediums ein Rückhalteelement für Fremdkörper vorgesehen.

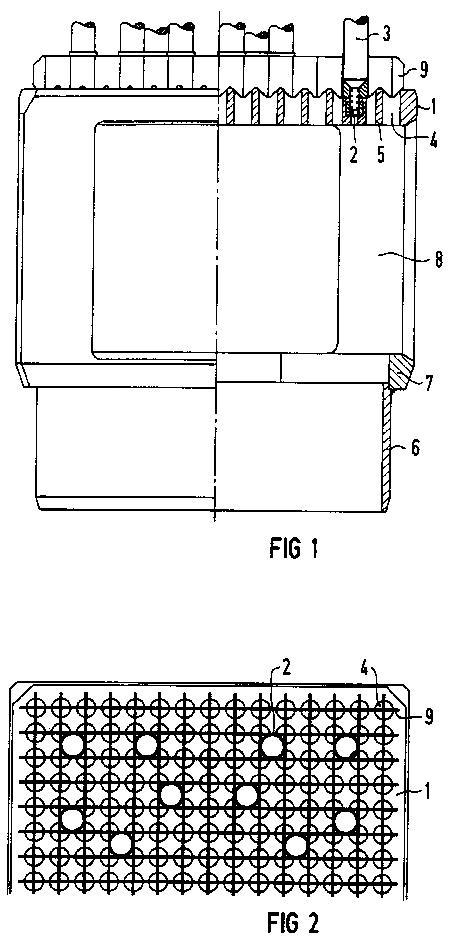

Dieser Aufbau entspricht den bisher üblichen, allgemein bekannten Brennelementen von Druckwasserreaktoren. Dabei sind im Stand der Technik im allgemeinen die Führungsrohre mit der Bodenplatte verschraubt, die als "Stabhalteplatte" bezeichnet wird und als Anschlag dient für Brennstäbe, die sich aus den Abstandhaltemitteln gelöst haben. In Fig. 1 ist das Fußteil eines derartigen, handelsüblichen Brennelementes dargestellt, dessen Stabhalteplatte 1 sowohl die Verschraubungen 2 für die Führungsrohre 3 wie auch die Eintrittsöffnungen 4 für das Arbeitsmedium trägt. Da das Fußteil über Druckfedern gegen das Kopfteil gedrückt wird, muß die Bodenplatte die Kraft der Druckfedern aufnehmen und an die Führungsrohre übertragen. Die zwischen den Eintrittsöffnungen verbleibenden Stege 5 benötigen daher eine erhebliche Dicke, um diesen Kräften standzuhalten.

Im allgemeinen werden quadratische Brennelemente verwendet, die am unteren Ende ihres Fußteils ein zylindrisches Rohr 6 tragen, das an einem massiven Rahmen 7 verschweißt ist. Dieser Rahmen trägt in seinen Ecken Zentrierbohrungen, mit denen er auf Stiften aufsitzt, um im Reaktorkern fixiert zu werden. Der Rahmen 7 und die Bodenplatte 1 sind über Winkelstücke 8 miteinander verbunden, wobei für einen transversalen Austausch des Kühlmittels größere Öffnungen vorgesehen sind.

Dieser Aufbau ist im rechten Teil der Fig. 1 im Schnitt, im linken Teil in Aufsicht dargestellt.

Trotz größter Sorgfalt bei Fertigung, Montage und Einsetzen der Brennelemente können Späne, Federteile, Muttern oder andere Fremdkörper in den Kühlmittelkreislauf gelangen und durch die Stabhalteplatte hindurch in die Zwischenräume zwischen den Brennstäben getragen werden. Bleiben sie an den Abstandhaltemitteln oder anderen Hindernissen hängen, so können - insbesondere wenn beim Reaktorbetrieb Vibrationen auftreten - die Brennelemente geschädigt werden ("Fretting-Schäden"). Deshalb wird häufig ein eigenes Rückhaltemittel im Kühlmittelstrom vorgesehen, das in Fig. 1 als ein entsprechendes Siebgitter 9 auf der Oberseite der Stabhalteplatte dargestellt ist.

Fig. 2 zeigt eine Aufsicht auf das Fußteil nach Demontage der Führungsrohre und Brennstäbe. Man erkennt hierbei, daß das Siebgitter 9 die Durchtrittsöffnungen 4 jeweils in vier kleinere Öffnungen unterteilt, an denen wenigstens die größeren Fremdkörper hängen bleiben.

Ein derartiges Fußteil ist also im wesentlichen aus 5 Bauteilen oder Bauteil-Gruppen zusammengesetzt:
der Stabhalteplatte 1, dem Rahmen 7, einer aus den Winkelblechen 8 gebildeten Schürze, dem Rohrstück 6 und dem Siebgitter, gitter, falls ein entsprechendes Rückhaltemittel nicht an anderer Stelle im Kühlmittelstrom vorgesehen ist.

Dieser prinzipielle Aufbau hat sich bisher bewährt und wurde selbst in solchen Einzelheiten beibehalten, die durch die Geometrie und die Abmessungen im Reaktorkern nicht vorgegeben sind. Versuche, die Kosten für Herstellung und Montage zu senken, haben sich bisher in Verbesserungen der Fertigungstechniken erschöpft und nicht im prinzipiellen Aufbau der Fußteile.

Die Erfindung schafft einen einfacheren Gesamtaufbau und eine leichtere und billigere Herstellung der Fußteile.

Dies gelingt gemäß der Erfindung durch ein Brennelement mit der Merkmalen des Anspruchs 1. So ist bei einem Brennelement der eingangs genannten Art das Rohrstück unmittelbar an der Unterseite der Bodenplatte befestigt und die Bodenplatte trägt an den Ekken ihres polygonalen Querschnittes die Zentrierbohrungen, während ihr vom Umfang des Rohrstückes begrenzter Teil praktisch alle Eintrittsöffnungen trägt, wobei die Führungsrohre an den außerhalb der Eintrittsöffnungen verbleibenden Stegen befestigt sind. Ferner ist an der Außenseite der Bodenplatte eine parallel zu den Führungsrohren verlaufende Schürze befestigt, von der ein Lochblech getragen wird, das das Fußteil nach oben abschließt. Dieses Lochblech ist durchsetzt von größeren Löchern zur Aufnahme der Führungsrohre und von kleineren Löchern, deren Abmessungen der Größe der zurückzuhaltenden Fremdkörper und deren Anzahl einem vorgegebenen Druckverlust für das durchströmende Arbeitsmedium angepaßt sind. Die Brennstäbe können dabei z.B. auch auf dem Lochblech aufstehen.

Vorteilhafte Weiterbildungen der Erfindung sind in den Unteransprüchen gekennzeichnet. Anhand von mehreren Ausführungsbeispielen und weiteren 7 Figuren wird die Erfindung näher erläutert.

Es zeigen:
Fig. 1 ein Fußteil nach dem Stand der Technik, teils in Vorderansicht, teils im Längsschnitt, wie es eingangs bereits beschrieben wurde,
Fig. 2 die bereits beschriebene Aufsicht auf die Oberseite des bekannten Fußteils,
Fig. 3 und Fig. 4 erste Ausführungsbeispiele des erfindungsgemäßen Fußteils, teils im Querschnitt, teils in der Außenansicht,
Fig. 5 und Fig. 6 die Hälfte anderer Ausführungsbeispiele, wobei das Lochblech teilweise entfernt ist und den Blick auf die Bodenplatte freigibt,
Fig. 7 bis 9 Quadranten von Bodenplatten mit unterschiedlichen Eintrittsöffnungen, und
Fig. 10 und 11 ein weiteres Ausführungsbeispiel des erfindungsgemäßen Fußteils, teils im Längsschnitt, teils in der Außenansicht.

Da das erfindungsgemäße Brennelement bezüglich der Anordnung und Gestalt der Brennstäbe, des Kopfteils und der Abstandshaltemittel auf übliche Art aufgebaut sein kann, erübrigt sich eine genauere Beschreibung und eine zeichnerische Darstellung dieser Teile.

Die Neukonstruktion des Fußteils geht von folgendem Konzept aus:
Die obere Abdeckung des Fußteils hat die Funktion, wie im Stand der Technik Fremdkörper zurückzuhalten und gegebenenfalls einen Anschlag für aufstehende Brennstäbe zu bilden, jedoch wird die Befestigung der Führungsrohre und die damit verbundene Kraftübertragung in den unteren Teil des Fußteils verlegt. Dadurch kann die Stabhalteplatte, die im Stand der Technik massiv ausgeführt ist, zu einem dünnen Lochblech abgemagert werden, das die kombinierte Funktion der Fremkörper-Rückhaltung und der Stabhalterung übernimmt.

Der Rahmen mit den Zentrierbohrungen zum Ausrichten des Brennkörperfußes im Reaktorkern wird ersetzt durch eine massive Platte, die sowohl die Zentrierbohrungen als auch die Verschraubungen der Führungsrohre trägt und die auftretenden Kräfte übernimmt. Die Verschraubungen sitzen dabei auf entsprechend massiven Stegen, während zwischen den Stegen möglichst große Löcher herausgebrochen sind, um einen ungehinderten Durchgang des Kühlmittels zu ermöglichen.

Die Winkelbleche, die im Stand der Technik die Stabhalteplatte mit dem Rahmen verbinden, werden durch eine einfacher zu fertigende Schürze ersetzt, die z.B. zusammen mit dem Lochblech als ein integriertes Konstruktionsteil hergestellt werden kann.

Dabei können größere Fremdkörper bereits an den Eintrittsöffnungen der Bodenplatte und/oder Durchtrittsöffnungen der Schürze abgefangen werden, so daß das Lochblech von schwereren Teilchen nicht beschädigt oder verstopft werden kann und gleichzeitig eine möglichst gleichmäßige Verteilung des Kühlmittelstroms über den Querschnitt des Brennelementes ermöglicht.

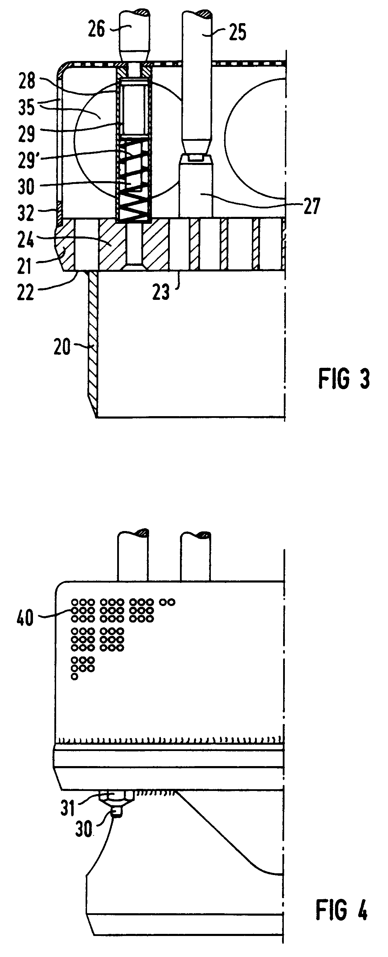

Entsprechend zeigt Fig. 3, wie bei einem ersten Ausführungsbeispiel ein zylindrisches Rohrstück 20 unmittelbar an der Unterseite der Bodenplatte 21 befestigt ist. Die Bodenplatte, die dem polygonalen Querschnitt des Brennelementes angepaßt ist, trägt an den Ecken des Polygons die Zentrierbohrungen, die in Fig. 3 mit 22 angedeutet sind. Innerhalb der Kreisfläche, die auf der Bodenplatte durch den Ansatz des zylindrischen Rohrstückes 20 beschrieben wird, weist die Bodenplatte die Eintrittsöffnungen 23 auf, zwischen denen massive Stege 24 verlaufen, an denen die Führungsrohre 25, 26 befestigt sind.

Eine lösbare Befestigung der Führungsrohre kann z.B. dadurch erfolgen, daß die Führungsrohre ein in einen Zapfen (30 in Fig. 4) auslaufendes Endstück tragen, wobei dieser Zapfen durch die Bodenplatte geführt und von unten durch eine Mutter 31 gehalten ist. Eine derartige Befestigung hat den Vorteil, daß die massiven Stege 24 der Bodenplatte nur entsprechend kleine Öffnungen zum Durchführen des Zapfens benötigen. Andererseits ist die Mutter 31 zwar von unten leicht zugänglich, kann aber unter sehr unglücklichen Umständen verloren werden. In Fig. 3 ist vorgesehen, die Führungsrohre mittels einer Mutter in der Bodenplatte oder einem Ansatz 27 der Bodenplatte zu halten. Dieser Ansatz kann an der Bodenplatte verschweißt und relativ kurz ausgeführt sein (27 in Fig. 3), vorteilhaft kann er aber auch als Stützsäule 28 ausgebildet sein, die von der Bodenplatte getragen ist, sich bis zur Lochplatte erstreckt und die Verschraubung der Führungsrohre mit der Bodenplatte aufnehmen. Wie Fig. 3 zeigt, ist für das Eindrehen der Führungsrohre die Mutter 29 über eine Druckfeder 29′ gehalten.

An den Außenseiten der Bodenplatte 21 ist eine parallel zu den Führungsrohren verlaufende Schürze 32 befestigt, die ein das Fußteil nach oben abdeckendes Lochblech 33 trägt. Dieses Lochblech ist durchsetzt von größeren Löchern zur Aufnahme der Führungsrohre 26 bzw. deren Endstücke, während eine Vielzahl von kleinen Löchern 34 die Fremdkörper in der Kühlmittelströmung zurückhalten. Die Größe dieser kleineren Löcher ist der Größe der Fremdkörper angepaßt, während ihre Anzahl und Verteilung so gewählt ist, daß das durchströmende Kühlmedium einen möglichst geringen Druckverlust erleidet und gleichmäßig über das Lochblech verteilt wird. An diesem Lochblech stehen die (in Fig. 3 nicht gezeigten) Brennstäbe auf.

In Fig. 3 trägt die Schürze 32 große Seitenöffnungen 35 für den Durchtritt des Arbeitsmediums, während bei einem anderen Ausführungsbeispiel, dessen Außenansicht in Fig. 4 gezeigt ist, die entsprechenden Seitenöffnungen von einer Vielzahl 40 kleiner Löcher gebildet werden.

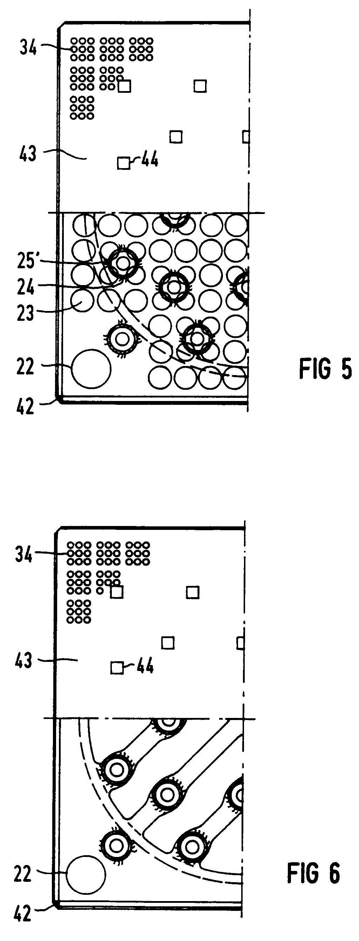

Vorteilhaft kann die Schürze von rechtwinkelig nach unten gebogenen Seitenlaschen der Lochplatte 21 gebildet werden, deren Seiten miteinander verschweißt werden (Schweißnaht 42 in Fig. 5). Im oberen Teil der Fig. 5 ist in der Aufsicht das Lochblech 43 gezeigt, das neben den kleinen Löchern 34 die größeren Löcher 44 mit einem eckigen Querschnitt trägt, wobei dann die (nicht gezeigten) Führungsrohre ebenfalls mit einem entsprechenden, eckigen Teil ihrer Endstücke in diese Rohre eingreifen. Dadurch können Torsionskräfte aufgefangen werden, ohne daß sich die Führungsrohre auf dem Lochblech verdrehen können.

Im unteren Teil der Fig. 5 ist das Lochblech weggebrochen, um den Blick auf die Bodenplatte mit den Zentrierbohrungen 22, den Eintrittsöffnungen 23 und den an den Stegen 24 vorgesehenen Verschraubungen 25′ der Führungsrohre freizugeben. Diese Verschraubungen, die als angeschweißte Ansätze an der Bodenplatte ausgeführt sind, sitzen dabei auf Kreuzungsstellen von Stegen, so daß die Breite der Stege außerhalb dieser Kreuzungen relativ klein gewählt werden können.

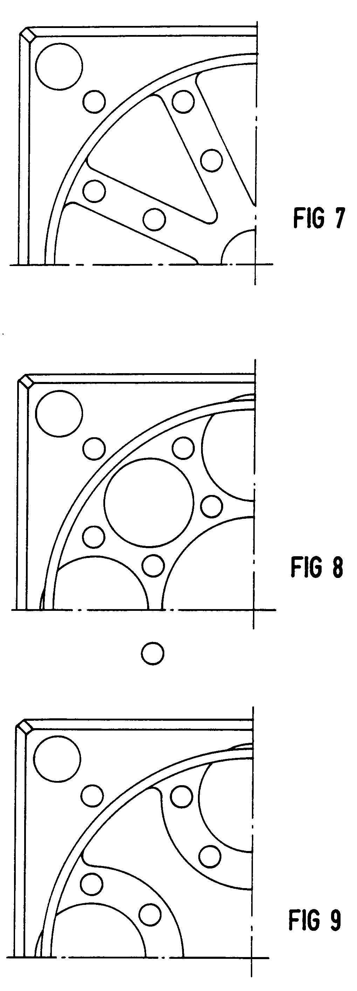

Bei dem entsprechenden Ausführungsbeispiel der Fig. 6 verlaufen alle Stege zueinander parallel und kreuzungsfrei und es sind nur so viele Stege vorgesehen, wie die Geometrie der Führungsrohre unbedingt erfordert. Dadurch entstehen große Eintrittsöffnungen, die jeweils ein Vielfaches der Querschnittsfläche eines Führungsrohres besitzen, jedoch müssen die Stege ebenfalls verhältnismäßig breit sein. Die Figuren 7, 8 und 9 zeigen andere Ausführungen der Bodenplatte mit dem aufgesetzten zylindrischen Rohrstück von unten. Dabei können die Löcher in den Stegen, die zur Verschraubung der Führungsrohre erforderlich sind, größer ausgeführt sein, so daß entsprechende Stützsäulen, in denen die Muttern sitzen, von unten für ein Werkzeug zugänglich werden.

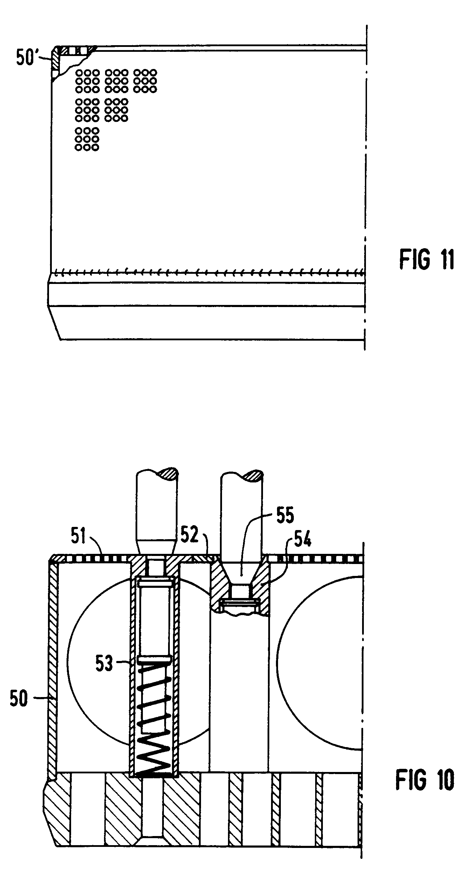

Die Figuren 10 und 11 entsprechen im wesentlichen den Figuren 3 und 4. Das zylindrische Rohrstück ist dabei weggelassen, jedoch ist gezeigt, daß die Schürze von einem Rohrstutzen 50 bzw. 50′ mit einem dem polygonalen Querschnitt der Bodenplatte angepaßten, polygonalen Querschnitt gebildet werden kann. Das Lochblech kann ferner aus Einzelsegmenten 51, 52 aufgebaut sein, die jeweils von der Schürze 50 und/oder einer Stützsäule 53, 54 getragen wird. Die Stützsäule und das von ihr getragene Segment können dabei miteinander zu einem Konstruktionsteil integriert sein, d.h. z.B. einstückig gefertigt werden.

Um die Führungsrohre mit ihren Endstücken leichter durch das Lochblech hindurch in die Verschraubung einführen zu können, können die Endstücke der Führungsrohre einen sich verjüngenden Querschnitt aufweisen, der in einen für die Verschraubung erforderlichen Zapfen 55 ausläuft.

Damit entsteht ein Fußteil, das gegenüber dem Stand der Technik, wie er z.B. in den Figuren 1 und 2 gezeigt ist, wesentlich kostengünstiger gefertigt und montiert werden kann.

## Patentansprüche

1. Brennelement für einen Druckwasser-Kernreaktor, mit
- einer polygonalen Bodenplatte in einem Zentrierbohrungen aufweisenden Fußteil am unteren Ende, die Eintrittsöffnungen für das Arbeitsmedium trägt,
- einem Kopfteil mit Austrittsöffnungen für das Arbeitsmedium am oberen Ende,
- in Längsrichtung sich erstreckenden Führungsrohren, die an ihrem oberen Ende im Kopfteil gehalten und an ihrem unteren Ende in der Bodenplatte lösbar befestigt sind, wobei die Dicke der Bodenplatte zur Aufnahme der bei der Montage und im Betrieb auftretenden Druck- und Zugkräfte bemessen ist,
- parallel zu den Führungsrohren angeordneten Brennstäben, die durch Abstandshaltemittel zwischen dem Fußteil und dem Kopfteil gehalten und in ihrem seitlichen Abstand von den Führungsrohren fixiert sind,
- einem Rückhalteelement für Fremdkörper im Strömungsweg des Arbeitsmediums, und
- einem unten im Fußteil angeordneten Rohrstück, wobei das Fußteil folgendermaßen aufgebaut ist:
a) das Rohrstück (20) ist unmittelbar an der Unterseite der Bodenplatte (21) befestigt,
b) die Zentrierbohrungen (22) sind an Ecken der polygonalen Bodenplatte (21) angeordnet, die Eintrittsöffnungen (23) für das Arbeitsmedium befinden sich praktisch ganz innerhalb der Fläche, die auf der Bodenplatte (21) durch den Ansatz des Rohrstücks (20) beschrieben wird, und zwischen den Eintrittsöffnungen (23) verlaufen Stege (24), an denen die Führungsrohre (25, 26) lösbar befestigt sind,
c) an den Außenseiten der Bodenplatte ist eine parallel zu den Führungsrohren verlaufende Schürze (32) befestigt, und
d) das Fußteil wird nach oben von einem von der Schürze (32) getragenen und das Rückhalteelement bildenden Lochblech abgedeckt, das durchsetzt ist von größeren Löchern zur Aufnahme der Führungsrohre (25, 26) und von kleineren Löchern (34), deren Abmessungen der Größe der zurückzuhaltenden Fremdkörper und deren Anzahl und Verteilung einem vorgegebenen Druckverlust für das durchströmende Arbeitsmedium angepaßt sind.

2. Brennelement nach Anspruch 1, **gekennzeichnet** **durch** Seitenöffnungen (35) der Schürze (32) für den Durchtritt des Arbeitsmediums.

3. Brennelement nach Anspruch 2, **gekennzeich****net durch** eine Vielzahl kleiner Löcher (40) als Seitenöffnungen der Schürze.

4. Brennelement nach Anspruch 1 oder einem der Ansprüche 2 und 3, **dadurch gekennzeichnet**, daß die Schürze (32) von rechtwinkelig nach unten gebogenen und miteinander verschweißten Seitenlaschen des Lochblechs (43) gebildet wird.

5. Brennelement nach Anspruch 1 oder einen der Ansprüche 2 und 3, **dadurch gekennzeichnet**, daß die Schürze von einem Rohrstutzen mit einem dem Querschnitt der Bodenplatte angepaßten polygonalen Querschnitt gebildet wird.

6. Brennelement nach Anspruch 1 oder einen der Ansprüche 2 bis 5, **dadurch gekennzeichnet**, daß die Bodenplatte (21) Stützsäulen (28) trägt, die sich bis zur Lochplatte erstrecken und die die Verschraubung (29, 29′, 30) der Führungsrohre der Bodenplatte aufnehmen.

7. Brennelement nach Anspruch 6, **dadurch gekennzeichnet**, daß das Lochblech aus Einzelsegmenten (51, 52) aufgebaut ist, die jeweils von der Schürze (50) und/oder einer Stützsäule (53) getragen werden.

8. Brennelement nach Anspruch 7, **dadurch gekennzeichnet**, daß jeweils ein von einer Stützsäule getragenes Segment und die entsprechende Stützsäule miteinander integriert sind.

9. Brennelement nach Anspruch 1 oder einen der Ansprüche 2 bis 8, **dadurch gekennzeichnet**, daß die Führungsrohre ein Endstück mit einem sich zu einem Gewindezapfen verjüngenden Querschnitt aufweisen und das sich verjüngende Teil des Endstücks durch die größeren Bohrungen des Lochbleches durchführbar sind.

10. Brennelement nach Anspruch 1 oder einem der Ansprüche 2 bis 9, **dadurch gekennzeichnet**, daß die größeren Löcher des Lochblechs einen eckigen Querschnitt aufweisen und die Führungsrohre mit einem entsprechend eckigen Teil in diese eckigen Löcher eingreifen.

11. Brennelement nach Anspruch 1 oder einem der Ansprüche 2 bis 10, **dadurch gekennzeichnet**, daß die Führungsrohre an der Bodenplatte von unten mit einer Mutter verschraubt sind.

12. Brennelement nach Anspruch 1 oder einem der Ansprüche 2 bis 10, **dadurch gekennzeichnet**, daß die Führungsrohre mittels einer Mutter, die in der Bodenplatte oder einem Ansatz der Bodenplatte gehalten ist, mit der Bodenplatte verschraubt sind.

13. Brennelement nach Anspruch 1 oder einem der Ansprüche 2 bis 12, **dadurch gekennzeichnet**, daß die Führungsrohre an der Kreuzungsstelle von Stegen verschraubt sind.

14. Brennelement nach Anspruch 1 oder einem der Ansprüche 2 bis 12, **dadurch gekennzeichnet**, daß die Eintrittsöffnungen in der Bodenplatte jeweils eine Durchtrittsfläche besitzen, die ein Vielfaches der Querschnittsfläche eines Führungsrohres aufweist.

## Claims

1. A fuel assembly for a pressurized-water nuclear reactor, comprising
- a polygonal base plate in a bottom part having centreing bores and situated at the lower end, which base plate carries inlet openings for the operating medium,
- a top part with outlet openings for the operating medium at the top end,
- guide tubes extending in the longitudinal direction, which are held at their upper end in the top part and are detachably secured at their lower end in the base plate, the thickness of the base plate being dimensioned to absorb the pressure and tension forces occurring during assembly and in operation,
- fuel rods arranged parallel to the guide tubes, which are held by spacer means between the bottom part and the top part and are fixed in their lateral distance from the guide tubes,
- a retention element for foreign bodies in the flow path of the operating medium, and
- a tubular member arranged at the bottom of the bottom part, the bottom part being constructed as follows:
a) the tubular member (20) is attached directly to the underside of the base plate (21),
b) the centreing bores (22) are arranged at corners of the polygonal base plate (21), the inlet openings (23) for the operating medium are located virtually entirely within the area described on the base plate (21) by the attachment of the tubular member (20), and webs (24) extend between the inlet openings (23), to which the guide tubes (25, 26) are detachably secured,
c) secured to the exterior sides of the base plate is a skirt (32) which extends parallel to the guide tubes, and
d) the bottom part is covered at the top by a perforated plate supported by the skirt (32) and forming the retention element, the said perforated plate being penetrated by larger holes for holding the guide tubes (25, 26) and smaller holes (34), of which the dimensions are adapted to the size of the foreign bodies to be retained and the number and distribution to a predetermined loss of pressure of the operating medium flowing through.

2. A fuel assembly according to claim 1, characterized by side openings (35) of the skirt (32) for the passage through of the operating medium.

3. A fuel assembly according to claim 2, characterized by a plurality of small holes (40) as side openings of the skirt.

4. A fuel assembly according to claim 1 or one of claims 2 and 3, characterized in that the skirt (32) is formed by side lugs of the perforated plate (43) which are folded downwards at a right angle and welded together.

5. A fuel assembly according to claim 1 or one of claims 2 and 3, characterized in that the skirt is formed by a pipe stub with a polygonal cross-section adapted to the cross-section of the base plate.

6. A fuel assembly according to claim 1 or one of claims 2 to 5, characterized in that the base plate (21) supports supporting columns (28) which extend as far as the perforated plate and which hold the screw coupling (29, 29′, 30) of the guide tubes of the base plate.

7. A fuel assembly according to claim 6, characterized in that the perforated plate is made up of individual segments (51, 52) each supported by the skirt (50) and/or by a supporting column (53).

8. A fuel assembly according to claim 7, characterized in that each segment supported by a supporting column and the corresponding supporting column are integrated with one another.

9. A fuel assembly according to claim 1 or one of claims 2 to 8, characterized in that the guide tubes have an end piece with a cross-section which tapers to a threaded pin and the tapering part of the end piece may be passed through the larger bores of the perforated plate.

10. A fuel assembly according to claim 1 or one of claims 2 to 9, characterized in that the larger holes of the perforated plate have an angular cross-section and a correspondingly angular part of the guide tubes engages in these angular holes.

11. A fuel assembly according to claim 1 or one of claims 2 to 10, characterized in that the guide tubes are screwed to the base plate from beneath with a nut.

12. A fuel assembly according to claim 1 or one of claims 2 to 10, characterized in that the guide tubes are screwed to the base plate by means of a nut which is held in the base plate or an extension of the base plate.

13. A fuel assembly according to claim 1 or one of claims 2 to 12, characterized in that the guide tubes are screwed to the crossing point of webs.

14. A fuel assembly according to claim 1 or one of claims 2 to 12, characterized in that the inlet openings in the base plate each have an opening cross-section which is a multiple of the cross-sectional area of a guide tube.

## Revendications

1. Assemblage combustible pour un réacteur nucléaire à eau sous pression, comprenant
- à l'extrémité inférieure, une plaque de fond polygonale d'une embase, comportant des perçages de centrage et portant des orifices d'entrée du fluide de travail,
- à l'extrémité supérieure, une tête ayant des orifices de sortie du fluide de travail,
- des tubes-guides s'étendant dans e sens longitudinal, qui sont maintenus dans la tête par leur extrémité supérieure et qui sont fixés de façon amovible dans la plaque de fond par leur extrémité inférieure, l'épaisseur de la plaque de fond étant telle qu'elle absorbe les efforts de compression et de traction intervenant lors du montage et du fonctionnement,
- des crayons combustibles qui sont disposées parallèlement aux tubes-guides, qui sont maintenus entre l'embase et la tête par des moyens de maintien à distance et dont l'écartement latéral est fixé par les tubes-guides,
- un élément de retenue de corps étrangers dans la voie d'écoulement du fluide de travail, et
- un embout à la partie inférieure de l'embase, l'embase étant constituée de la manière suivante :
a) l'embout (20) est fixé directement sur la face inférieure de la plaque de fond (21),
b) les perçages de centrage (22) sont disposés aux sommets de la plaque de fond (21) polygonale, les orifices d'entrée (23) du fluide de travail se trouvent pratiquement entièrement à l'intérieur de la surface qui est décrite sur la plaque de fond(21) par le prolongement de l'embout (20), et, entre les orifices d'entrée (23), s'étendent des parties pleines (24) auxquelles sont fixés de façon amovible les tubes-guides (25, 26),
c) une jupe (32), s'étendant parallèlement aux tubes-guides, est fixée sur les côtés extérieurs de la plaque de fond, et
d) le haut de l'embase est recouvert d'une tôle perforée portée par la jupe (32), formant l'élément de retenue et comportant des trous plus grands destinés à la réception des tubes-guides (25, 26) et des trous plus petits (34), dont les dimensions sont adaptées à la taille des corps étrangers à retenir et dont le nombre et la répartition sont adaptés à une perte de charge prescrite pour le fluide de travail qui y passe.

2. Assemblage combustible selon la revendication 1, caractérisé par des orifices latéraux (35) pratiqués dans la jupè (32) pour le passage du fluide de travail.

3. Assemblage combustible selon la revendication 2, caractérisé par une multitude de petits trous (40) en tant qu'orifices latéraux de la jupe.

4. Assemblage combustible selon la revendication 1 ou l'une des revendications 2 et 3, caractérisé en ce que la jupe (32) est formée de languettes latérales de la tôle perforée (43) recourbées à angle droit vers le bas et soudées ensemble.

5. Assemblage combustible selon la revendication 1 ou l'une des revendications 2 et 3, caractérisé en ce que la jupe est formée par une tubulure ayant une section transversale adaptée à la section transversale polygonale de la plaque de fond.

6. Assemblage combustible selon la revendication 1 ou l'une des revendications 2 à 5, caractérisé en ce que la plaque de fond (21) porte des colonnes d'appui (28) qui s'étendent jusqu'à la plaque perforée et qui reçoivent l'assemblage vissé (29, 29′, 30) des tubes-guides de la plaque de fond.

7. Assemblage combustible selon la revendication 6, caractérisé en ce que la tôle perforée est constituée de segments individuels (51, 52) qui sont respectivement portés par la jupe (50) et/ou par une colonne support (53).

8. Assemblage combustible selon la revendication 7, caractérisé en ce qu'un segment porté par une colonne d'appui et la colonne d'appui correspondante sont intégrés entre eux.

9. Assemblage combustible selon la revendication 1 ou l'une des revendications 2 à 8, caractérisé en ce que les tubes-guides comportent un embout ayant une section transversale se rétrécissant en une tige filetée, et en ce que la partie de l'embout se rétrécissant peut passer par les plus grands perçages de la tôle perforée.

10. Assemblage combustible selon la revendication 1 ou l'une des revendications 2 à 9, caractérisé en ce que les plus grands trous de la tôle perforée ont une section transversale polygonale et que les tubes-guides pénètrent dans ces trous polygonaux par une partie polygonale correspondante.

11. Assemblage combustible selon la revendication 1 ou l'une des revendications 2 à 10, caractérisé en ce que les tubes-guides sont vissés à la plaque de fond par un écrou à partir du bas.

12. Assemblage combustible selon la revendication 1 ou l'une des revendications 2 à 10, caractérisé en ce que les tubes-guides sont vissés à la plaque de fond au moyen d'un écrou qui est retenu dans la plaque de fond, ou dans un prolongement de la plaque de fond.

13. Assemblage combustible selon la revendication 1 ou l'une des revendications 2 à 12, caractérisé en ce que les tubes-guides sont vissés au point d'intersection de parties pleines.

14. Assemblage combustible selon la revendication 1 ou l'une des revendications 2 à 12, caractérisé en ce que les orifices d'entrée dans la plaque de fond possèdent chacun une surface de passage qui repésente un multiple de la surface de la section transversale d'un tube-guide.
